# EUROPÄISCHE PATENTSCHRIFT

(11) **EP 4 352 375 B1**
(45) Veröffentlichungstag und Bekanntmachung des Hinweises auf die Patenterteilung: **20.08.2025**
(21) Anmeldenummer: 22847259.3
(22) Anmeldetag: 16.12.2022
(51) Int. Cl.: F16D 65/18, F16J 1/00

(54) **KOLBEN FÜR EINE SCHEIBENBREMSE, SCHEIBENBREMSE MIT ZUMINDEST EINEM KOLBEN UND BAUREIHE VON KOLBEN**
PISTON FOR A DISC BRAKE, DISC BRAKE WITH AT LEAST ONE PISTON AND SERIES OF PISTONS
PISTONS POUR FREIN À DISQUE, FREIN À DISQUE AVEC AU MOINS UN PISTON ET GAMME DE PISTONS

(30) Priorität: 24.02.2022 DE 102022104388
(43) Veröffentlichungstag der Anmeldung: 17.04.2024
(73) Patentinhaber: Erdrich Umformtechnik GmbH, 77871 Renchen-Ulm (DE)
(72) Erfinder: HAHN, Thomas, 99631 Weissensee (DE); BAUERSFELD, Rico, 06578 Kannawurf (DE); ZEIBIG, Uwe, 77855 Achern (DE)
(74) Vertreter: Mertzlufft-Paufler, Cornelius
(86) Internationale Anmeldenummer: PCT/EP2022/086388
(87) Internationale Veröffentlichungsnummer: WO 2023/160861

(56) Entgegenhaltungen:
- WO-A1-2015/074905
- WO-A1-2015/074905
- DE-A1- 102009 017 167
- DE-A1- 102009 017 167
- US-A1- 2011 132 188
- US-A1- 2011 132 188
- US-A1- 2011 315 007
- US-A1- 2011 315 007

## Beschreibung

Die Erfindung betrifft Kolben für Scheibenbremsen mit einer Anlagefläche für einen Bremsbelag, mit einem einen Kolbenmantel ausbildenden Außenteil und einem in das Außenteil eingesetzten Innenteil, wobei das Innenteil an seiner der Anlagefläche abgewandten Seite eine Öffnung und in seinem Inneren eine Aufnahme aufweist, über die der Kolben mit einer Hydraulikflüssigkeit und/oder mit Einstellmittel eines Feststellbremsenantriebs beaufschlagbar ist.

Die Druckschrift US 2011/0315007 A1 offenbart einen Kolben für einen Bremssattel einer Scheibenbremse, der in Umformverfahren aus einem metallischen Werkstoff hergestellt ist und als einseitig offener Topf ausgebildet ist, umfassend: eine Längsachse, eine Wandung und einen Kolbenboden, wobei der Kolben dazu ausgebildet ist, in einem Bereich des Kolbenbodens mit einer axialen Anlagefläche an einem Bremsbelag anzuliegen, wobei an einer Innenfläche des Kolbenbodens ein Vorsprung mit einer konischen Oberfläche für eine Anbringung einer Antriebsmutter zur mechanischen Betätigung vorgesehen ist, wobei in einer Außenfläche des Kolbenbodens eine Ausnehmung vorgesehen ist, die im Wesentlichen den gleichen Abstand von der Längsachse aufweist wie der Vorsprung.

Die Druckschrift WO 2015 074 905 A1 offenbart eine Kolbenanordnung für eine Scheibenbremse, umfassend einen Kolben der im Wesentlichen als einseitig offener, topfartiger Hohlzylinder aus Flachstahlblech in Kaltumformverfahren spanlos tiefgezogen gestaltet ist, und einen Kolbenboden sowie einstückig daran eine Wandung mit einer Nut umfasst, wobei der Kolbenboden ausgehend vom Topfinneren hydraulisch mit Bremsdruck beaufschlagbar ist, so dass eine auswärts gerichtete Anlagefläche des Kolbenbodens gegen einen Reibbelag gepresst wird, und wobei der Kolben zwecks Kooperation mit einer Antriebsmutter einer Feststellbremsbetätigungsvorrichtung einen Kupplungskonus aufweist, dadurch gekennzeichnet, dass der Kupplungskonus als Kaltverfestigung auf einer freien Stirnseite vom offenen Ende der Wandung vorgesehen ist, so dass die Feststellbremskräfte ausgehend vom offenen Ende über die Wandung in den Kolbenboden von dem Kolben eingeleitete werden.

Die Druckschrift US 2011/132188 A1 offenbart einen mehrteiligen Kolben für einen Bremssattel einer hydraulisch und/oder mechanisch und/oder elektromechanisch betätigbaren Scheibenbremse, der im Wesentlichen als einseitig offener, topfartiger Hohlzylinder mit einem Boden und einer daran angeformten Wandung ausgebildet ist, wobei der Boden zur Beaufschlagung mit einem aus dem Inneren des Topfes kommenden Bremsdruck ausgebildet ist, so dass eine nach außen gerichtete Anlagefläche des Bodens so ausgebildet ist, dass sie gegen einen Bremsklotz gepresst wird, und wobei das Innere des Topfes mindestens ein Druckstück aufnimmt, wobei das Druckstück und der Boden konische Flächen aufweisen, die zur Kraftübertragung aufeinander ausgerichtet sind.

Die Druckschrift DE 10 2009 017 167 A1 offenbart einen mehrteilig gebauten Kolben für einen Bremssattel einer hydraulisch und/oder mechanisch und/oder elektromechanisch betätigbaren Scheibenbremse, der im Wesentlichen als einseitig offener, topfartiger Hohlzylinder gestaltet ist, und einen Boden sowie einstückig daran eine Wandung umfasst, wobei der Boden ausgehend vom Topfinneren mit Bremsdruck beaufschlagbar ist, so dass eine auswärts gerichtete Anlagefläche des Bodens gegen einen Bremsbelag pressbar ist, und wobei das Topfinnere wenigstens ein Druckstück aufnimmt, das insbesondere in einen Kraftfluss von einem Feststellbremsmechanismus eingebunden ist, dadurch gekennzeichnet, dass Druckstück und Boden einander zugewandte Konusflächen zur Kraftübertragung aufweisen.

Derartige Kolben sind aus US 2011/0315007 A1, WO 2015 074 905 A1, US 2011/132188 A1 und DE 10 2009 017 167 A1 bekannt und werden dazu verwendet, einen Bremsbelag einer Scheibenbremse gegen eine Bremsscheibe der Scheibenbremse zu drücken. Dies kann wahlweise durch Beaufschlagung des Kolbens mit Hydraulikflüssigkeit oder durch Beaufschlagung des Kolbens mit einem Stellmittel eines Feststellbremsenantriebs erfolgen.

Die Erfindung betrifft ferner auch eine Scheibenbremse mit zumindest einem solchen Kolben sowie eine Baureihe umfassend zumindest zwei Typen derartiger Kolben.

Die Gestaltung der Kolben kann die Gebrauchseigenschaften der damit ausgestatteten Scheibenbremsen beeinflussen und auch entscheidend für eine wirtschaftliche Fertigung der Kolben sein.

Die Gestaltung der Kolben kann das Ansprechverhalten der damit ausgestatteten Scheibenbremsen beeinflussen. Vorteilhaft für das Ansprechverhalten der Scheibenbremse kann ein möglichst leichter Kolben sein. Zu beachten ist hierbei jedoch, dass die Kolben stabil genug sind, damit sie den gegebenenfalls hohen Drücken und damit verbundenen Belastungen dauerhaft standhalten können.

Die Gestaltung der Kolben kann beispielsweise auch entscheidend für eine einfache Entlüftung der Scheibenbremsen sein. Eine möglichst gut entlüftete Scheibenbremse ist hinsichtlich eines definierten Druckpunktes, der für einen Benutzer bei der Verwendung der Scheibenbremse spürbar ist, wünschenswert.

Aufgabe der Erfindung ist es daher, einen Kolben der eingangs genannten Art mit verbesserten Gebrauchseigenschaften bereitzustellen, der sich zudem wirtschaftlich fertigen lässt.

Zur Lösung dieser Aufgabe wird zunächst ein Kolben mit den Merkmalen des ersten unabhängigen, auf einen derartigen Kolben gerichteten Anspruchs vorgeschlagen. Insbesondere wird somit zur Lösung der Aufgabe ein Kolben für eine Scheibenbremse mit einer Anlagefläche für einen Bremsbelag, mit einem einen Kolbenmantel ausbildenden Außenteil und einem in das Außenteil eingesetzten Innenteil vorgeschlagen, wobei das Innenteil an seiner der Anlagefläche abgewandten Seite eine Öffnung und in seinem inneren eine Aufnahme aufweist, über die der Kolben mit einer Hydraulikflüssigkeit und/oder mit einem Stellmittel eines Feststellbremsenantriebs beaufschlagbar ist, und wobei zwischen dem Außenteil und dem Innenteil ein Hohlraum ausgebildet ist, der durch zumindest eine flüssigkeitsdichte Verbindung zwischen dem Innenteil und dem Außenteil gegen Eintritt von Hydraulikflüssigkeit aus der Aufnahme des Innenteils in den Hohlraum flüssigkeitsdicht verschlossen ist.

Auf diese Weise kann ein Kolben mit einem vergleichsweise großen effektiven Außendurchmesser, der durch sein Außenteil bestimmt wird, bereitgestellt werden, wobei sich der Kolben aufgrund seines Innenteils mit einer im Vergleich zum Außendurchmesser des Außenteils geringeren Außenabmessung mit einer vergleichsweise geringen Menge an Hydraulikflüssigkeit betreiben lässt. Durch die flüssigkeitsdichte Verbindung zwischen dem Innenteil und dem Außenteil wird effektiv verhindert, dass Hydraulikflüssigkeit aus der Aufnahme des Innenteils in den Hohlraum zwischen dem Innenteil und dem Außenteil gelangt. Die reduzierte Menge an Hydraulikflüssigkeit kann das Entlüften der mit dem Kolben ausgestatteten Scheibenbremse vereinfachen. Zudem ermöglicht die Verwendung eines Außenteils und eines in dem Außenteil angeordneten Innenteils die Leichtbaugestaltung des Kolbens. Dies kann die Dynamik des Kolbens beim Betrieb der Scheibenbremse verbessern. Eine Reduktion der Menge an Hydraulikflüssigkeit in einer mit dem erfindungsgemäßen Kolben ausgestatteten Scheibenbremse kann sich positiv auf die Bremsfunktion und das Ansprechverhalten der Scheibenbremse auswirken. Je größer die Menge an Hydraulikflüssigkeit im Bremssystem ist, desto weicher kann sich die Scheibenbremse beim Bremsen für einen Benutzer anfühlen. Neben einer Gewichtsersparnis durch die Reduktion der Menge an Hydraulikflüssigkeit im Bremssystem können außerdem dem Kolben vorgelagerte Teile der Scheibenbremse, beispielsweise ein Bremssattel, weniger steif und dadurch günstiger ausgebildet werden. Durch einen geringeren Materialeinsatz bei der Herstellung der dem Kolben vorgelagerten Teile kann sich zudem eine weitere Gewichtsersparnis ergeben. Der erfindungsgemäße Kolben ermöglicht somit die Bereitstellung von Scheibenbremsen mit verbesserter Bremsfunktion, die zudem leichter sind und preisgünstiger angeboten als bisherige Scheibenbremsen werden können.

Durch den zumindest zweiteiligen Aufbau des Kolbens umfassend das Innenteil und das Außenteil ist der Materialaufwand bei der Fertigung des Kolbens reduziert, selbst wenn der Kolben eine vergleichsweise großen Außenabmessung aufweist. Auf diese Weise wird ein vergleichsweise günstiger und zudem auch in Bezug auf seine Abmessungen leichter Kolben bereitgestellt.

Bei einer Ausführung des Kolbens ist vorgesehen, dass der Hohlraum durch zwei in Bezug auf eine Längsachse des Kolbens axial voneinander beabstandete flüssigkeitsdichte Verbindungen zwischen dem Innenteil und dem Außenteil gegen Eintritt von Hydraulikflüssigkeit aus der Aufnahme des Innenteils in den Hohlraum flüssigkeitsdicht verschlossen ist.

Ein derartiger Kolben kann einen besonders einfachen Aufbau aufweisen. Das Außenteil kann hierbei die Form einer Hülse aufweisen, die das Innenteil umgibt. Durch zwei flüssigkeitsdichte Verbindungen zwischen dem Innenteil und dem Außenteil können das Innenteil und das Außenteil miteinander verbunden und zudem der zwischen dem Innenteil und dem Außenteil ausgebildete Hohlraum flüssigkeitsdicht verschlossen, insbesondere versiegelt sein. Dabei können die beiden flüssigkeitsdichten Verbindungen zwischen dem Innenteil und dem Außenteil von unterschiedlichen axialen Seiten des Kolbens angebracht oder hergestellt werden. Dies ermöglicht die einfache Herstellung des Kolbens und insbesondere der flüssigkeitsdichten Verbindungen. Ferner kann die Verwendung zweier flüssigkeitsdichter Verbindungen auch die Bereitstellung einer weiter unten noch näher erläuterten Baureihe von Kolben begünstigen, die zumindest zwei unterschiedliche Typen von Kolben umfasst.

Zur Lösung der Aufgabe wird auch ein Kolben mit den Merkmalen des zweiten unabhängigen, auf einen derartigen Kolben gerichteten Anspruchs vorgeschlagen. Somit wird insbesondere zur Lösung der Aufgabe bei einem Kolben der eingangs genannten Art vorgeschlagen, dass das Außenteil in Bezug auf eine Längsachse des Kolbens axial beabstandet zu einer Einsetzöffnung für das Innenteil eine Halteöffnung für das Innenteil aufweist, in der das Innenteil zur Abstützung an dem Außenteil angeordnet ist. Durch die axial zur Einsetzöffnung beabstandet vorgesehene Halteöffnung des Außenteils für das Innenteil ist es möglich, eine Druckkraft von dem Innenteil besonders zuverlässig und effektiv auf das Außenteil und/oder auf eine Anlagefläche des Kolbens für einen Bremsbelag einer mit dem Kolben ausgestatteten Scheibenbremse zu übertragen. Die Halteöffnung kann einen Boden des Außenteils durchsetzen.

Insbesondere im Zusammenhang mit den zunehmenden Leichtbauanforderungen, denen auch derartige Kolben unterworfen sind, hat diese Art der Abstützung des Innenteils an dem Außenteil Vorteile. Die Abstützung des Innenteils an dem Außenteil über die Halteöffnung des Außenteils ermöglicht eine steife Ausgestaltung des Kolbens auch bei vergleichsweise geringem Materialeinsatz. Dies begünstigt die Gebrauchseigenschaften des erfindungsgemäßen Kolbens.

Bei einer Ausführungsformen des Kolbens ist vorgesehen, dass dieser die Merkmale der beiden unabhängigen, jeweils auf einen Kolben für eine Scheibenbremse gerichteten Ansprüche miteinander kombiniert aufweist.

Bei einer Ausführungsformen der Erfindung ist vorgesehen, dass die zumindest eine flüssigkeitsdichte Verbindung eine stoffschlüssige Verbindung, beispielsweise eine Schweißverbindung ist. Besonders bevorzugt, weil schnell und effizient herstellbar, ist es, wenn die zumindest eine flüssigkeitsdichte Verbindung eine Laserschweißverbindung ist.

Die zumindest eine flüssigkeitsdichte Verbindung kann die Längsachse des Kolbens ringförmig, insbesondere kreisringförmig, geschlossen umgeben. Auf diese Weise wird sichergestellt, dass die Verbindung flüssigkeitsdicht ist.

Bei einer Ausführungsform des Kolbens ist vorgesehen, dass die Einsetzöffnung des Außenteils für das Innenteil durch eine, insbesondere erste, flüssigkeitsdichte Verbindung flüssigkeitsdicht verschlossen ist.

Erfindungsgemäß ist die insbesondere erste, flüssigkeitsdichte Verbindung zwischen einem die Einsetzöffnung des Außenteils für das Innenteil begrenzenden Rand des Außenteils und dem Innenteil ausgebildet. Bei einer Ausführungsform des Kolbens kann diese Verbindung zwischen einer Krempe des Innenteils und dem Außenteil ausgebildet sein. Die Krempe kann die Öffnung des Innenteils umgeben und/oder einen größten Durchmesser des Innenteils bilden.

Das Innenteil ist vorzugsweise als flüssigkeitsdichter Topf ausgebildet. Ein derartiger flüssigkeitsdichter Topf kann eine flüssigkeitsdichte Innenwandung aufweisen. Auf diese Weise wird ein Austritt von Flüssigkeit durch die Innenwandung des Innenteils in den zwischen dem Innenteil und dem Außenteil ausgebildeten Hohlraum effektiv vermieden. Die Aufnahme des Innenteils kann hinterschnittfrei ausgebildet sein. Durch eine hinterschnittfreie Gestaltung der Aufnahme kann vermieden werden, dass sich Luftblasen innerhalb der Aufnahme verfangen und das Entlüften der mit dem Kolben ausgestatteten Scheibenbremse erschweren.

Das Außenteil kann einen Stützabschnitt aufweisen, an dem die Halteöffnung für das Innenteil ausgebildet ist und über den das Innenteil in Zustellrichtung des Kolbens an dem Außenteil abgestützt ist. Der Stützabschnitt kann insbesondere an einem Boden des Außenteils angeordnet oder ausgebildet sein. Der Stützabschnitt kann durch eine Umformung des Außenteils, insbesondere durch eine Umformung seines Bodenabschnitts, ausgebildet sein.

Bei einer Ausführungsform ist vorgesehen, dass der Stützabschnitt ausgehend von der Anlagefläche des Kolbens einen spitzen Winkel mit der Längsachse des Kolbens und/oder mit der Anlagefläche des Kolbens aufspannt. Der spitze Winkel kann ein Winkel zwischen jeweils einschließlich 30° und 60° und vorzugsweise ein Winkel von 45° sein. Insbesondere bei einer Ausrichtung des Stützabschnitts in einem Winkel von 45° zur Längsachse und/oder zur Anlagefläche des Kolbens ist eine besonders effiziente Kraftübertragung zwischen dem Innenteil und dem Außenteil möglich. Durch den Stützabschnitt kann eine Kraftumlenkung von dem Innenteil auf das Außenteil in Stufen erfolgen, was wiederum die Kraftübertragung zwischen Innenteil und Außenteil begünstigt.

Eine, insbesondere eine zweite, flüssigkeitsdichte Verbindung kann die zuvor erwähnte Halteöffnung flüssigkeitsdicht verschließen und/oder zwischen dem Stützabschnitt des Außenteils und dem Innenteil ausgebildet sein.

Die Halteöffnung des Außenteils kann in Bezug auf eine Längsachse des Kolbens axial zwischen der Anlagefläche des Kolbens und der Einsetzöffnung des Außenteils angeordnet sein. Die Halteöffnung kann hierbei in einem Boden des Außenteils ausgebildet sein.

Die Einsetzöffnung des Außenteils kann einen größeren Durchmesser als ihre Halteöffnung für das Innenteil aufweisen.

Das Innenteil kann einen sich konisch verjüngenden Abschnitt aufweisen, mit dem das Innenteil an dem Außenteil abgestützt ist. Das Innenteil kann mit dem konischen Abschnitt in der Halteöffnung des Außenteils angeordnet und an dem Außenteil abgestützt sein. Der sich konisch verjüngende Schnitt des Innenteils kann ein Endabschnitt des Innenteils sein, der an einem der Öffnung des Innenteils abgewandten Ende des Innenteils ausgebildet ist. Der konische Abschnitt kann kegelstumpfförmig sein und an seinem Ende eine Axialfläche des Innenteils aufweisen, die zumindest einen Teil der Anlagefläche des Kolbens bilden kann. Die Halteöffnung des Außenteils kann einen Innendurchmesser aufweisen, der kleiner eine Außenabmessung des Innenteils in einem dem konischen Abschnitt vorgelagerten Abschnitt ist. Durch den konischen Abschnitt kann das Innenteil besonders einfach in der vorzugsweise kreisförmigen Halteöffnung des Außenteils zentriert positioniert werden. Dadurch, dass das Innenteil in dem dem konischen Abschnitt vorgelagerten Abschnitt einen größeren Durchmesser aufweist, lässt sich das Innenteil besonders einfach und zielsicher in seine ordnungsgemäße Position relativ zu dem Außenteil bringen. Dies begünstigt die wirtschaftliche Herstellung des Kolbens.

Die Anlagefläche des Kolbens kann zumindest zum Teil an dem Außenteil und/oder zumindest zum Teil an dem Innenteil ausgebildet sein. Insgesamt kann so die Anlagefläche des Kolbens für einen Bremsbelag auf das Außenteil und das Innenteil verteilt werden. In diesem Zusammenhang ist es vorteilhaft, wenn eine axiale Stirnfläche des Außenteils und eine axiale Stirnfläche des Innenteils in einer gemeinsamen Ebene liegen und/oder gemeinsam die Anlagefläche des Kolbens bilden.

Das Innenteil kann in seiner Aufnahme einen Führungsabschnitt für ein Stellmittel eines Feststellbremsenantriebs aufweisen. Das Innenteil kann eine Verdrehsicherung, beispielsweise in Form eines unrunden Innenquerschnitts des Führungsabschnitts, für ein Stellmittel eines Feststellbremsenantriebs aufweisen.

Das Innenteil kann in seiner Aufnahme eine hydraulisch wirksame Beaufschlagungsfläche aufweisen. Die hydraulisch wirksame Beaufschlagungsfläche kann hierbei in Bezug auf eine Längsachse des Kolbens axial zwischen der Anschlagfläche des Kolbens für einen Bremsbelag und der zuvor erwähnten Halteöffnung des Außenteils für das Innenteil angeordnet sein.

Das Innenteil kann eine Anschlagfläche für ein Stellmittel eines Feststellbremsenantriebs aufweisen. Die Anschlagfläche kann hierbei in Bezug auf eine Längsachse des Kolbens zwischen der Anlagefläche des Kolbens für einen Bremsbelag und der Einsetzöffnung des Außenteils und/oder der Öffnung des Innenteils angeordnet sein.

Die zuvor erwähnte, hydraulisch wirksame Beaufschlagungsfläche kann in Bezug auf eine Längsachse des Kolbens axial zwischen der zuvor erwähnten Anschlagfläche für ein Stellmittel eines Feststellbremsenantriebs und der Anlagefläche des Kolbens für einen Bremsbelag angeordnet sein.

Bei einer Ausführungsform des Kolbens ist zumindest eine flüssigkeitsdichte Verbindung zwischen dem Innenteil und dem Außenteil eine an einer Stirnseite des Kolbens ausgebildete flüssigkeitsdichte Verbindung. Bei einer bevorzugten Ausführungsform des Kolbens weist dieser zwischen dem Innenteil und dem Außenteil an zwei einander abgewandten Stirnseiten jeweils eine flüssigkeitsdichte Verbindung zwischen Außenteil und Innenteil auf. Stirnseitige flüssigkeitsdichte Verbindungen sind aus fertigungstechnischer Sicht günstig. Die stirnseitige Anordnung der Verbindungen kann die Ausbildung der flüssigkeitsdichten Verbindungen, insbesondere durch einen Schweißverfahren, beispielsweise durch Laserschweißen, vereinfachen.

Bei einer Ausführungsform des Kolbens ist vorgesehen, dass das Außenteil einen geschlossenen um eine Längsachse des Kolbens umlaufenden Kragen aufweist. Der Kragen kann die Einsetzöffnung des Außenteils für das Innenteil begrenzen und/oder radial in Richtung der Längsachse des Kolbens bzw. des Außenteils nach innen ausgerichtet sein. Dabei kann eine flüssigkeitsdichte Verbindung zwischen dem Innenteil und dem Außenteil zwischen dem Kragen und dem Innenteil angeordnet oder ausgebildet sein. Auch bei einem Kolben, dessen Außenteil einen derartigen Kragen aufweist, ist es möglich, die flüssigkeitsdichte Verbindung zwischen Kragen und dem Innenteil stirnseitig zu erzeugen.

Bei einer Ausführungsform des Kolbens, dessen Außenteil einen Kragen aufweist, kann der Kragen ferner eine Stufe aufweisen. An der Stufe kann das Innenteil anliegen, insbesondere mit einer Krempe, die das Innenteil aufweisen und die die zuvor bereits erwähnte Öffnung des Innenteils umgegeben kann. Eine derartige Stufe an einem Kragen des Außenteils kann die Positionierung des Innenteils im bzw. am Außenteil vereinfachen und letztendlich auch die Ausbildung einer stirnseitig erzeugten flüssigkeitsdichten Verbindung zwischen Außenteil und Innenteil begünstigen.

Das Außenteil kann bei einer Ausführungsform des Kolbens einen Boden aufweisen. Der Boden kann der Teil des Außenteils sein, der quer oder rechtwinklig zur Längsachse des Außenteils und/oder quer oder rechtwinklig zur Längsachse des Kolbens ausgerichtet und/oder an einem der Einsetzöffnung des Außenteils abgewandten Ende des Außenteils angeordnet ist. Der Boden kann bei einer Ausführungsform des Kolbens geschlossen ausgebildet sein. An oder auf diesem Boden kann dann das Innenteil des Kolbens angeordnet sein. Insbesondere in diesem Zusammenhang kann das Innenteil hülsenförmig ausgebildet sein und keinen eigenen Boden aufweisen.

Bei einer Ausführungsform des Kolbens ist vorgesehen, dass im, vorzugweise geschlossenen, Boden des Außenteils eine Vertiefung, beispielsweise eine Nut, vorzugsweise eine geschlossen umlaufende Ringnut, ausgebildet ist. In dieser Vertiefung, insbesondere in dieser Nut oder Ringnut, kann dann das Innenteil angeordnet sein. Insbesondere in diesem Zusammenhang ist es möglich, dass das Innenteil hülsenförmig ausgebildet ist und selbst keinen Boden aufweist. Die im Boden des Außenteils ausgebildete Vertiefung, insbesondere die Nut oder Ringnut, kann hilfreich sein, um das Innenteil zuverlässig und einfach in dem Außenteil zu positionieren und eine flüssigkeitsdichte Verbindung zwischen Außenteil und Innenteil auszubilden.

Bei einer bevorzugten Ausführungsform des Kolbens ist eine flüssigkeitsdichte Verbindung zwischen Außenteil und Innenteil eine durch einen, insbesondere geschlossenen, Boden des Außenteils erzeugte Schweißverbindung. Die Schweißverbindung kann beispielsweise als Laserschweißverbindung sein. Eine derartig durch den Boden des Außenteils erzeugte Schweißverbindung zwischen Außenteil und Innenteil kann auf besonders effiziente Weise auch in der Serienfertigung leicht erzeugt werden und ist daher für eine wirtschaftliche Fertigung des Kolbens vorteilhaft.

Das Außenteil kann bei einer Ausführungsform des Kolbens an seiner der Einsetzöffnung abgewandten Stirnseite eine Stirnöffnung aufweisen. Die Stirnöffnung kann im Boden des Außenteils ausgebildet sein und/oder einen Rand aufweisen, der einen Abstand zu dem Innenteil aufweist. Auf diese Weise sitzt das Innenteil dann innerhalb der Stirnöffnung des Außenteils, ohne das Außenteil zu kontaktieren. Durch die Stirnöffnung, die zusätzlich zu der Einsetzöffnung am Außenteil ausgebildet sein kann, kann das Außenteil ein besonders geringes Gewicht aufweisen.

Das Innenteil kann bei einer Ausführungsform des Kolbens an seiner Außenseite einen Absatz aufweisen. Besonders bevorzugt kann der Absatz als Halteabsatz ausgebildet sein. Mit dem Absatz kann das Innenteil das Außenteil kontaktieren. So ist es beispielsweise möglich, dass das Innenteil mit seinem Absatz in einer, beispielsweise in der zuvor bereits erwähnten, Halteöffnung, insbesondere im Boden, des Außenteils angeordnet ist. Auf diese Weise kann das Innenteil aufgrund des Absatzes vergleichsweise einfach und genau in dem Außenteil positioniert und zentriert werden. Dies kann die Erzeugung einer insbesondere stirnseitigen flüssigkeitsdichten Verbindung zwischen Außenteil und Innenteil im Bereich der Halteöffnung des Außenteils begünstigen.

Bei einer Ausführungsform des Kolbens ist vorgesehen, dass das Innenteil einen der Öffnung in die Aufnahme des Innenteils abgewandten Abschnitt aufweist, dessen Durchmesser, insbesondere dessen Außendurchmesser, kleiner als ein Durchmesser, insbesondere als ein Außendurchmessers, eines an die Öffnung des Innenteils angrenzenden Abschnitts des Innenteils ist. Auf diese Weise kann das Innenteil einen gestuften Querschnitt erhalten. Durch den gestuften Querschnitt kann der zuvor erwähnte Absatz an der Außenseite des Innenteils ausgebildet sein.

Aufgabe der Erfindung ist es ferner, eine Baureihe von derartigen Kolben bereitzustellen, die eine rationelle Produktion derartiger Kolben ermöglicht.

Die Erfindung betrifft schließlich auch eine Baureihe von Kolben für Scheibenbremsen mit zumindest zwei Typen von Kolben nach einem der auf einen Kolben gerichteten Ansprüche, wobei die zumindest zwei Typen von Kolben identische Innenteile, insbesondere Innenteile, die hinsichtlich ihrer Aufnahmen identisch zueinander sind, und unterschiedliche Außenteile aufweisen, insbesondere Außenteile mit unterschiedlichen Außendurchmessern. Auf diese Weise ist es möglich, zur Herstellung von Kolben mit unterschiedlichen Außenteilen, insbesondere zur Herstellung von Kolben mit unterschiedlichen Außendurchmessern, lediglich die Außenteile zu variieren und Innenteile zu verwenden, die zumindest hinsichtlich des Volumens ihrer Aufnahmen, identisch sind. Dabei können die Innenteile insbesondere hinsichtlich der Innenkontur ihrer jeweiligen Aufnahmen identisch zueinander ausgebildet sein. Sämtliche Typen von Kolben können dann zumindest hinsichtlich der Aufnahme des Innenteils nur eine Art von Innenteil aufweisen. Dies kann die Fertigung der Baureihe von Kolben durch Reduktion der Teilevielfalt vereinfachen.

Zudem kann die Aufnahme des Innenteils das Volumen an Hydraulikflüssigkeit im Bremssystem mitbestimmen, das mit dem Kolben ausgestattet ist. Um das Bremsverhalten des Bremssystems zu optimieren, ist eine möglichst geringe Menge an Hydraulikflüssigkeit im Bremssystem wünschenswert. Durch die hinsichtlich ihrer Aufnahmen übereinstimmenden Innenteile der zumindest zwei Typen von Kolben und die zumindest eine flüssigkeitsdichte Verbindung zwischen Außenteil und Innenteil bei den Kolben der Baureihe wird sichergestellt, dass die Menge an Hydraulikflüssigkeit im Kolben unabhängig vom Außendurchmesser des Außenteils des Kolbens ist, der den Außendurchmesser des Kolbens definiert. Die Menge an Hydraulikflüssigkeit in den unterschiedlichen Kolben der Baureihe wird dann durch die Aufnahmen der Innenteile und ihr Volumen vorgegeben. Da die Aufnahmen der Innenteile der unterschiedlichen Typen von Kolben der Baureihe vorzugsweise zumindest hinsichtlich ihres Volumens identisch sind, beinhalten die Kolben der Baureihe unabhängig von ihren Kolbendurchmessern dann dieselbe Menge an Hydraulikflüssigkeit.

Bei einer Ausführungsform der Baureihe von Kolben ist vorgesehen, dass die Außenteile der unterschiedlichen Typen von Kolben Halteöffnungen mit identischen Innendurchmessern für Innenteile aufweisen, auch wenn sie sich hinsichtlich ihrer Außendurchmessern unterscheiden. Auf diese Weise sind die Außenteile der unterschiedlichen Typen von Kolben hinsichtlich ihrer Halteöffnungen identisch ausgebildet, so dass sie zur Aufnahme der für alle Typen von Kolben identischen Innenteile geeignet sind.

Die Erfindung wird nachfolgend anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder in Kombination einzelner oder mehrerer Merkmale der Ausführungsbeispiele. Es zeigen:

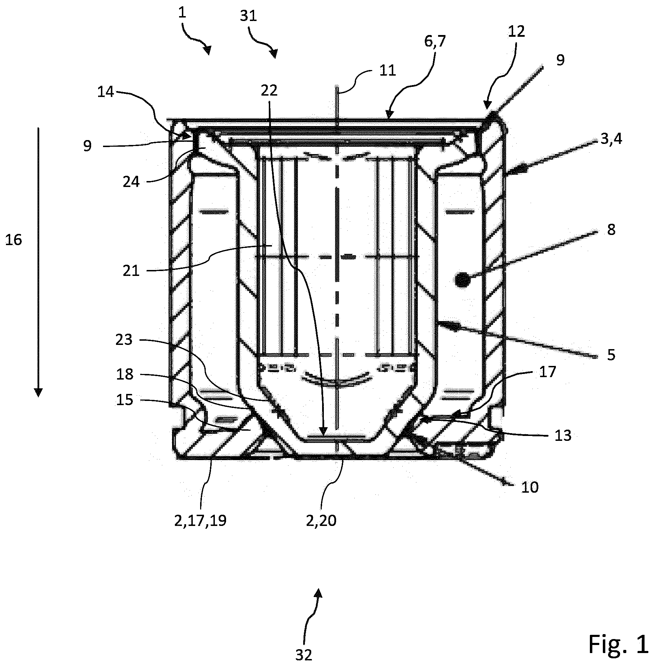

- Fig. 1: eine geschnittene Seitenansicht eines Kolbens mit einem in ein Außenteil eingesetzten Innenteil, wobei das Außenteil und das Innenteil durch zwei in Bezug auf eine Längsachse des Kolbens voneinander beabstandete, flüssigkeitsdichte Verbindungen so miteinander verbunden sind, dass ein zwischen dem Innenteil und dem Außenteil angeordneter Hohlraum flüssigkeitsdicht verschlossen ist,

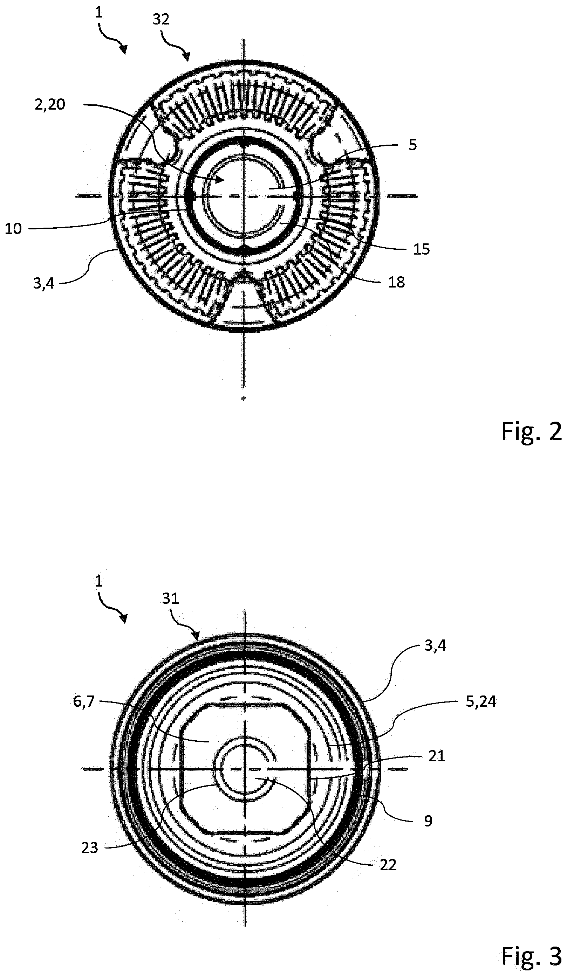

- Fig. 2: eine Unteransicht des in Fig. 1 gezeigten Kolbens,
- Fig. 3: eine Draufsicht des in den Fig. 1 und 2 gezeigten Kolbens,

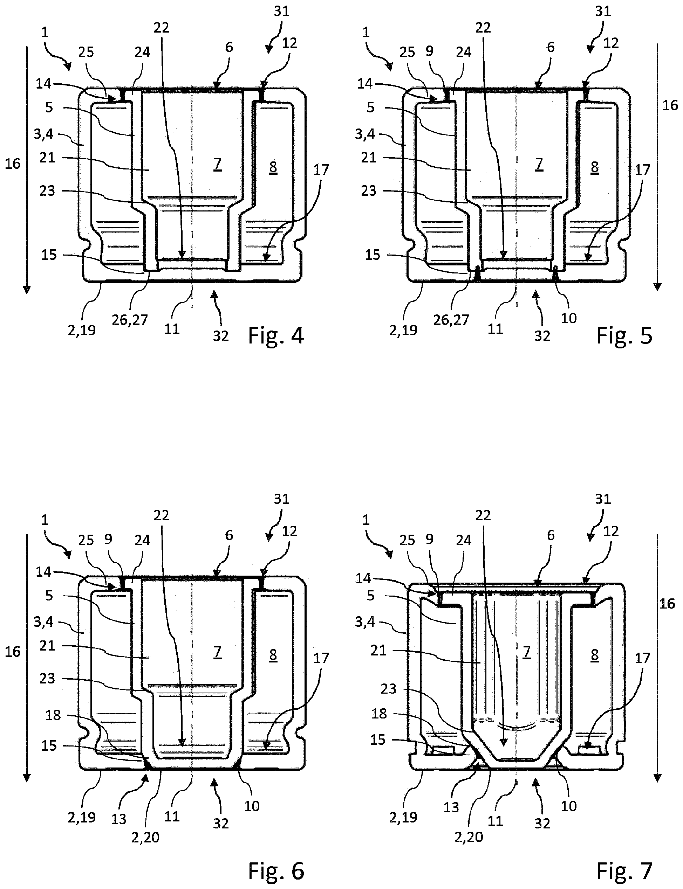

- Fig. 4: eine geschnittene Ansicht eines weiteren Kolbens vor Erzeugung zweier in Bezug auf eine Längsachse des Kolbens axial voneinander beabstandeter flüssigkeitsdichter Verbindungen, dessen Außenteil einen geschlossenen Boden mit einer Vertiefung, nämlich mit einer geschlossen umlaufenden Nut aufweist, in der das hülsenförmige Innenteil des Kolbens, das keinen Boden bzw. einen offenen Boden aufweist, angeordnet ist, wobei das Außenteil ferner einen nach innen gerichteten Kragen aufweist, der die Einsetzöffnung des Außenteils für das Innenteil begrenzt,
- Fig. 5: eine geschnittene Ansicht des in Figur 4 gezeigten Kolbens nach Erzeugung der beiden flüssigkeitsdichten Verbindungen zwischen Außenteil und Innenteil, wobei die untere der beiden Verbindungen eine durch einen geschlossenen Boden des Außenteils erzeugte, stirnseitige Laserschweißverbindung ist,
- Fig. 6: eine geschnittene Ansicht eines weiteren Kolbens, dessen Außenteil in seinem Boden, der eben ausgebildet ist, eine Halteöffnung für das Innenteil aufweist, wobei zwischen Außenteil und Innenteil zwei flüssigkeitsdichte, in Bezug auf eine Längsachse des Kolbens axial voneinander beabstandete, stirnseitig erzeugte, Laserschweißverbindungen ausgebildet sind, durch die der Hohlraum zwischen Außenteil und Innenteil flüssigkeitsdicht abgedichtet ist,
- Fig. 7: eine geschnittene Ansicht eines weiteren Kolbens, der vom Aufbau her dem Kolben aus Fig.1 ähnelt, wobei bei diesem Kolben das Außenteil einen abgewinkelten Boden aufweist, der durch eine Halteöffnung für das Innenteil durchsetzt ist, und eine erste flüssigkeitsdichte Verbindung zwischen einer Krempe des Innenteils und einem nach innen gerichteten Kragen des Außenteils und eine zweite flüssigkeitsdichte Verbindung in der Halteöffnung des Außenteils für das Innenteil zwischen Außenteil und Innenteil ausgebildet sind,

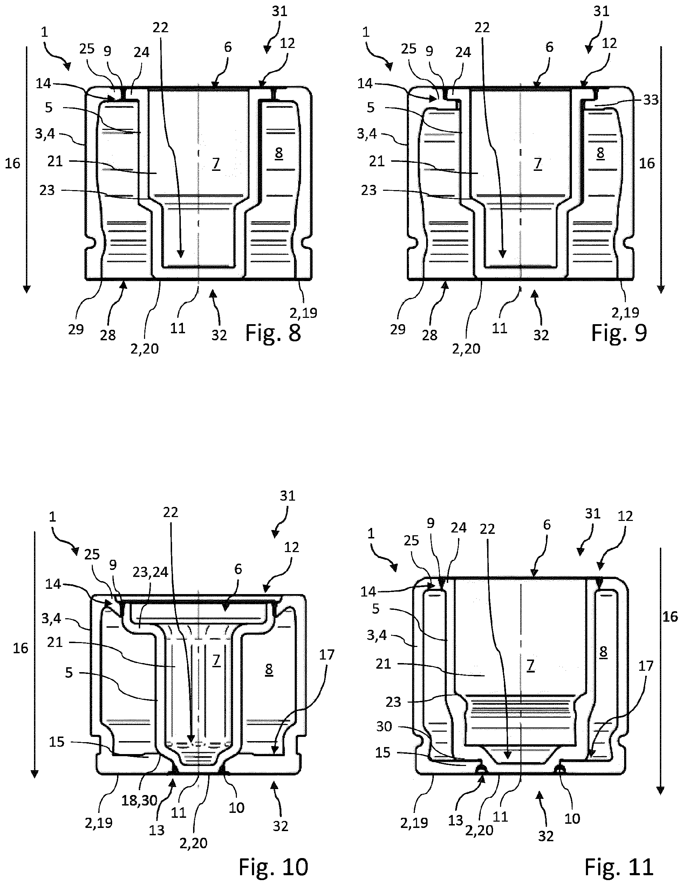

- Fig. 8: eine geschnittene Ansicht eines weiteren Kolbens, der ein stirnseitig offenes Außenteil ohne Boden und ein darin angeordnetes, gestuftes Innenteil und eine einzige stirnseitige, zwischen einem Kragen des Außenteils und einer Krempe des Innenteils angeordnete flüssigkeitsdichte Laserschweißverbindung aufweist,
- Fig. 9: durch die der Hohlraum zwischen Außenteil und Innenteil gegen eine hydraulische Seite des Kolbens abgedichtet ist, eine geschnittene Ansicht eines weiteren Kolbens, dessen Aufbau dem Aufbau des in Figur 8 gezeigten Kolbens ähnelt, wobei dieser Kolben an seinem Außenteil einen Kragen mit einer Stufe aufweist, an der das Innenteil mit seiner Krempe anliegt,
- Fig. 10: eine geschnittene Ansicht eines weiteren Kolbens mit einem Innenteil, das einen die Öffnung des Innenteils beinhaltenden, gegenüber einem nachgelagerten Abschnitt des Innenteils erweiterten Halteabschnitt aufweist, und mit einem Außenteil, das eine Halteöffnung für das Innenteil aufweist, wobei zwei flüssigkeitsdichte Verbindungen zwischen Innenteil und Außenteil ausgebildet sind, durch die der Hohlraum zwischen Außenteil und Innenteil flüssigkeitsdicht abgeschlossen ist, sowie
- Fig.11: eine geschnittene Ansicht eines weiteren Kolbens, der ein Innenteil mit einem Halteabsatz an seiner Außenseite aufweist, über den das Innenteil in einer Halteöffnung des Außenteils an dem Außenteil abgestützt ist.

Sämtliche Figuren zeigen jeweils einen im Ganzen mit 1 bezeichneten Kolben für eine Scheibenbremse.

Bei der nachfolgenden Beschreibung unterschiedlicher Ausführungsbeispiele der Kolben 1 erhalten hinsichtlich ihrer Funktion übereinstimmende Teile der Kolben auch bei abweichender Gestaltung übereinstimmende Bezugszeichen. Wo nicht gesondert darauf hingewiesen wird, beziehen sich die nachfolgenden Ausführungen auf alle in den Figuren gezeigten Ausführungsbeispiele.

Jeder der Kolben 1 weist eine in Bezug auf seine Längsachse 11 axial ausgerichtete Anlagefläche 2 auf, mit der ein Bremsbelag an eine Bremsscheibe einer Scheibenbremse gedrückt werden kann.

Jeder der Kolben 1 umfasst ein einen Kolbenmantel 3 ausbildendes Außenteil 4 und ein in das Außenteil 4 eingesetztes Innenteil 5.

Das Innenteil 5 weist an seiner der Anlagefläche 2 des Kolbens 1 abgewandten Seite eine Öffnung 6 und in seinem Inneren eine Aufnahme 7 auf, über die der Kolben 1 mit einer Hydraulikflüssigkeit und/oder mit einem Stellmittel eines Feststellbremsenantriebs beaufschlagt werden kann, um den Kolben 1 in einer Zustellrichtung 16 zuzustellen.

Zwischen dem Außenteil 4 und Innenteil 5 ist ein Hohlraum 8 ausgebildet. Der Hohlraum 8 insbesondere der Kolben 1 gemäß den Figuren 1 bis 3, 5 bis 7 sowie 10 und 11 ist durch zwei flüssigkeitsdichte Verbindungen 9 und 10 zwischen dem Innenteil 5 und dem Außenteil 4 gegen Eintritt von Hydraulikflüssigkeit aus der Aufnahme 7 des Innenteils 5 in den Hohlraum 8 flüssigkeitsdicht verschlossen. Die beiden flüssigkeitsdichten Verbindungen 9 und 10 sind in Bezug auf die Längsachse 11 des Kolbens 1 axial voneinander beabstandet. Der Hohlraum 8 ist zwischen den beiden Verbindungen 9 und 10 ausgebildet.

Bei den Kolben 1 der Figuren 1 bis 3, 6 und 7 sowie 10 und 11 weist das Außenteil 4 eine Halteöffnung 13 für das Innenteil 5 auf, die in Bezug auf die Längsachse 11 des Kolbens 1 axial beabstandet zu einer Einsetzöffnung 12 für das Innenteil 5 ist. In der Halteöffnung 13 ist das Innenteil 5 zur Abstützung an dem Außenteil 4 angeordnet. Bei allen in den Figuren gezeigten Kolben 1, die eine Halteöffnung 13 aufweisen, durchsetzt die Halteöffnung 13 einen Boden 17 des jeweiligen Außenteils 4.

Die beiden flüssigkeitsdichten Verbindungen 9 und 10 sind jeweils stoffschlüssige Verbindungen, nämlich lasergeschweißte Schweißverbindungen. Die beiden Verbindungen 9 und 10 umgeben die Längsachse 11 des jeweiligen Kolbens 1 jeweils ringförmig, nämlich kreisringförmig, wie die Figuren 2 und 3 veranschaulichen.

Die Einsetzöffnung 12 des Außenteils 4 für das Innenteil 5 ist durch eine erste flüssigkeitsdichte Verbindung 9 der beiden flüssigkeitsdichten Verbindungen 9 und 10 zwischen dem Außenteil 4 und dem Innenteil 5 flüssigkeitsdicht verschlossen.

Die erste flüssigkeitsdichte Verbindung 9 ist dabei zwischen einem die Einsetzöffnung 12 des Außenteils 4 begrenzenden Rand 14 des Außenteils 4 und dem Innenteil 5 ausgebildet. Die Kolben 1 gemäß den Figuren 8 und 9 weisen nur eine einzige flüssigkeitsdichte Verbindung 9 zwischen dem Außenteil 4 und dem Innenteil 5 auf.

Das Innenteil 5 ist als flüssigkeitsdichter Topf ausgebildet, wie insbesondere die Schnittdarstellung des Kolbens 1 aus Figur 1 verdeutlicht. Auch bei den Kolben 1 der Figuren 6 bis 11 ist das Innenteil 5 als flüssigkeitsdichter Topf ausgebildet. Die Aufnahme 7 des Innenteils 5 aller Kolben 1 ist ferner hinterschnittfrei ausgebildet. So wird verhindert, dass sich Luftblasen innerhalb der Aufnahme 7 verfangen und das Entlüften der mit dem Kolben 1 ausgestatteten Scheibenbremse erschweren.

Das Außenteil 4 der Kolben 1 der Figuren 1 bis 3, 6 und 7 sowie 10 und 11 weist einen Stützabschnitt 15 auf, an dem die Halteöffnung 13 für das Innenteil 5 ausgebildet ist und über den das Innenteil 15 in Zustellrichtung 16 des Kolbens 1 an dem Außenteil 4 abgestützt ist.

Gemäß den Schnittdarstellungen aus den Figur 1, 7 und 10 spannt der Stützabschnitt 15 des Außenteils 4 jeweils einen spitzen Winkel mit der Längsachse 11 und auch mit der Anlagefläche 2 des Kolbens 1 andererseits auf. Der Stützabschnitt 15 spannt mit der Anlagefläche 2 und der Längsachse 11 des Kolbens 1 jeweils einen Winkel von 45° auf. Gemäß den Schnittdarstellungen aus den Figuren 6 und 11 spannt der Stützabschnitt 15 des Außenteils 4 einen rechten Winkel mit der Längsachse 11 des Kolbens 1 auf.

Die zweite flüssigkeitsdichte Verbindung 10 der beiden flüssigkeitsdichten Verbindungen 9 und 10, die bei einzelnen Kolben 1 vorgesehen ist, verschließt die Halteöffnung 13 des Außenteils 4 flüssigkeitsdicht. Dabei ist die zweite flüssigkeitsdichte Verbindung 10 zwischen dem Stützabschnitt 15 des Außenteils 4 und dem Innenteil 5 ausgebildet.

Die Halteöffnung 13 des Außenteils 4 ist in Bezug auf die Längsachse 11 des Kolbens 1 axial zwischen der Anlagefläche 2 des Kolbens 1 und der Einsetzöffnung 12 des Außenteils 4 in einem Boden 17 des Außenteils 4 ausgebildet.

Die Einsetzöffnung 12 des Außenteils 4 weist bei allen Kolben 1, die eine Halteöffnung 13 aufweisen, einen größeren Durchmesser als die Halteöffnung 13 des Außenteils 4 für das Innenteil 5 auf. Das Innenteil 5 weist einen sich zu seinem geschlossenen Ende hin konisch verjüngenden Abschnitt 18 auf. Mit dem konischen Abschnitt 18 ist das Innenteil 5 an dem Außenteil 4 abgestützt. Das Innenteil 5 ist mit seinem konischen Abschnitt 18 in der Halteöffnung 13 des Außenteils 4 positioniert.

Die Anlagefläche 2 des Kolbens 1 ist zu einem Teil an dem Außenteil 4 und zu einem anderen Teil an dem Innenteil 5 ausgebildet. Eine axiale Stirnfläche 19 des Außenteils 4 und eine axiale Stirnfläche 20 des Innenteils 5 sind hierfür in einer gemeinsamen Ebene, nämlich in einer gemeinsamen Axialebene des Kolbens 1 angeordnet und bilden gemeinsam die Anlagefläche 2 des Kolbens 1.

Das Innenteil 5 insbesondere der in den Figuren 1 bis 10 dargestellten Kolben 1 weist eine Krempe 24 auf, die die Öffnung 6 außenseitig umgibt und zwischen der und dem Außenteil 4 die erste flüssigkeitsdichte Verbindung 9 ausgebildet ist.

Das Innenteil 5 weist gemäß Figur 1 in seiner Aufnahme 7 einen Führungsabschnitt 21 für ein Stellmittel eines Feststellbremsenantriebs auf. Der Führungsabschnitt 21 hat einen unrunden Innenquerschnitt zur Verdrehsicherung des Stellmittels. Auch die Innenteile 4 der übrigen Kolben 1 weisen in ihren Aufnahmen 7 einen Führungsabschnitt 21 für ein Stellmittel eines Feststellbremsenantriebs auf.

In seiner Aufnahme 7 hat das Innenteil 5 der Kolben 1 der Figuren 1 bis 3 sowie 6 bis 11 ferner eine hydraulisch wirksame Beaufschlagungsfläche 22 und eine Anschlagfläche 23 für ein Stellmittel eines Feststellbremsenantriebs. Die Anschlagfläche 23 für das Stellmittel eines Feststellbremsenantriebs ist bei dem in den Figuren 1 bis 3 gezeigten Kolben 1 in Fortsetzung des Stützabschnitts 15 des Außenteils 4 angeordnet. Die Anschlagfläche 23 ist an einer Innenseite des konischen Abschnitts 18 des Innenteils 5 ausgebildet. Dies begünstigt eine direkte Kraftübertragung des Stellmittels eines Feststellbremsenantriebs über das Innenteil auf den Stützabschnitt 15 des Außenteils 4. In Gebrauchsstellung ist der in den Figuren gezeigte Kolben 1 Teil einer nicht gezeigten Scheibenbremse.

Bei dem in Figur 4 und 5 gezeigten Ausführungsbeispiel des Kolbens 1 weist das Außenteil 4 einen umlaufenden Kragen 25 auf, der die Einsetzöffnung 12 des Außenteils 4 für das Innenteil 5 geschlossen umgibt.

Das Innenteil 5 des in Figur 4 gezeigten Kolbens 1 ist hülsenförmig und ohne Boden ausgebildet und weist an seiner dem Kragen 25 des Außenteils 4 benachbarten Ende eine Krempe 24 auf. Zwischen der Krempe 24 und dem Kragen 25 ist gemäß Figur 5 eine stirnseitig eingebrachte, flüssigkeitsdichte Verbindung 9 zwischen Außenteil 4 und Innenteil 5 in Form einer Laserschweißverbindung ausgebildet. Durch diese flüssigkeitsdichte Verbindung 9 ist der Hohlraum 8 zwischen dem Außenteil 4 und dem Innenteil 5 gegenüber einer hydraulisch belasteten Seite des Kolbens 1 flüssigkeitsdicht abgedichtet.

Das Außenteil 4 des in Figur 4 gezeigten Kolbens 1 weist einen geschlossenen Boden 17 auf. Im geschlossenen Boden 17 ist eine Vertiefung 26 in Form einer Nut 27, nämlich einer Ringnut gebildet. In dieser Nut 27 ist das Innenteil 5 angeordnet.

Figur 5 zeigt den Kolben 1 aus Figur 4 mit einer zweiten, zusätzlich zu der ersten flüssigkeitsdichten Verbindung 9 stirnseitig zwischen Außenteil 4 und Innenteil 5 erzeugten flüssigkeitsdichten Verbindung 10. Diese zweite flüssigkeitsdichte Verbindung 10 ist in Bezug auf eine Längsachse 11 des Kolbens 1 axial zur ersten flüssigkeitsdichten Verbindung 9 beabstandet zwischen Außenteil 4 und Innenteil 5 ausgebildet. Figur 5 zeigt dabei, dass diese weite flüssigkeitsdichte Verbindung 10 als Schweißverbindung, nämlich als Laserschweißverbindung ausgebildet ist, die durch den geschlossenen Boden 17 des Außenteils 4 erzeugt wurde. Diese Variante des Kolbens 1 zeichnet sich durch seine besonders einfache Herstellbarkeit auch in der Serienfertigung aus. Die Vertiefung 26 in Form der Nut 27 im Boden 17 des Außenteils 4 dieses Kolbens 1 begünstig die genaue Positionierung des Innenteils 5 im Außenteil 4 und damit auch die Ausbildung der stirnseitig durch den geschlossenen Boden 17 des Außenteils 4 erzeugten zweiten flüssigkeitsdichten Verbindung 10.

Figur 6 zeigt eine Ausführungsform des Kolbens 1, bei der das Außenteil 4 einen Kragen 25 und an seinem dem Kragen 25 abgewandten Ende eine Halteöffnung 13 aufweist. Die Halteöffnung 13 ist gemäß Figur 6 in einem ebenen, nicht abgewinkelten Boden 17 des Außenteils 4 ausgebildet. Das im Querschnitt gestufte Innenteil 25 weist eine Krempe 24 auf, die die Öffnung 6 des Innenteils 5 umgibt. Ferner ist das Innenteil 5 mit dem der Krempe 24 abgewandten Ende in der Halteöffnung 13 des Außenteils 4 angeordnet und über diese an dem Außenteil 4 abgestützt.

Zwischen dem Kragen 25 des Außenteils 4 und der Krempe 24 des Innenteils 5 ist eine erste flüssigkeitsdichte Verbindung 9 in Form einer Laserschweißverbindung stirnseitig eingebracht. Eine zweite flüssigkeitsdichte Verbindung 10 zwischen dem Außenteil 4 und dem Innenteil 5 ist innerhalb der Halteöffnung 13 im Boden 17 des Außenteils 4 stirnseitig zwischen Außenteil 4 und Innenteil 5 ausgebildet.

Figur 7 zeigt eine weitere Ausführungsform eines Kolbens 1, dessen Aufbau dem in Figur 1 gezeigten Aufbau des Kolbens 1 entspricht. Auch bei diesem Kolben 1 weist das Außenteil 4 einen Boden 17 auf, der abgewinkelt ist und von einer Halteöffnung 13 für das Innenteil 5 durchsetzt ist. Allerdings weist das Innenteil 5 bei dem in Figur 7 gezeigten Kolben 1 eine Krempe 24 und das Außenteil 4 einen Kragen 25 auf. Auch bei diesem Kolben 1 ist eine der beiden flüssigkeitsdichten Verbindungen 9 und 10 zwischen der Krempe 24 am Innenteil 5 und dem Kragen 25 am Außenteil 4 ausgebildet.

Die in den Figuren 1 bis 3, 4 bis 7 und 10 und 11 gezeigten Kolben 1 weisen an zwei einander abgewandten Stirnseiten 31 und 32 des jeweiligen Kolbens 1 jeweils eine flüssigkeitsdichte Verbindung 9 oder 10 zwischen Außenteil 4 und Innenteil 5 auf.

Die beiden in den Figuren 8 und 9 gezeigten Kolben 1 weisen jeweils ein Außenteil 4 auf, das an seiner der Einsetzöffnung 12 für das Innenteil 5 abgewandten Stirnseite 32 eine Stirnöffnung 28 aufweist. Die Figuren 8 und 9 zeigen, dass der jeweilige Rand 29 der Stirnöffnung 28 einen Abstand zu dem Innenteil 5 des jeweiligen Kolbens 1 einnimmt. An dem der Einsetzöffnung 12 abgewandten Ende des Außenteils 4 besteht somit zwischen Außenteil 4 und Innenteil 5 keine Verbindung. An dieser Stelle sei erwähnt, dass das Innenteil 5 der in die Figuren 8 und 9 gezeigten Kolben 1 bei Bedarf auch durch die Stirnöffnungen 28 in die jeweiligen Außenteil 4 eingesetzt werden kann.

Das Außenteil 4 des in Figur 9 gezeigten Kolbens 1 weist an seinem Kragen 25 ferner eine Stufe 33 auf, an der das Innenteil 5 mit seiner Krempe 24 anliegt.

Die Figuren 1, 7, 10 und 11 zeigen, dass die Innenteile 5 der in diesen Figuren wiedergegebenen Kolben 1 an ihrer Außenseite jeweils einen Absatz 30 aufweisen. Der jeweilige Absatz 30 fungiert als Halteabsatz, mit dem das Innenteil 5 das Außenteil 4 und hier insbesondere einen Boden 17 des jeweiligen Außenteils 4 kontaktiert. Bei den in den Figuren 1, 7, 10 und 11 jeweils gezeigten Ausführungsbeispiel des Kolbens 1 ist deutlich zu erkennen, dass die Innenteile 5 über ihre Absätze 30 in den Halteöffnungen 13 des jeweiligen Außenteils 4 zentriert sind. Dies begünstigt die Ausbildung der jeweiligen zweiten flüssigkeitsdichten und stirnseitig zwischen Innenteil 4 und Aufenthalt 5 erzeugten Schweißverbindung, insbesondere Laserschweißverbindung.

Der Aufbau der in den Figuren 1-11 gezeigten Kolben 1 erlaubt die Bereitstellung einer Baureihe umfassend zumindest zwei unterschiedliche Typen derartiger Kolben 1. Die zwei Typen von Kolben 1 weisen identische Innenteile 5 auf und unterscheiden sich durch ihre Außenteile 4 voneinander. Die Außenteile 4 haben unterschiedliche Außendurchmesser. So ist es möglich, eine Baureihe von mehreren Typen von Kolben 1 bereitzustellen, die unterschiedlich große Außendurchmesser haben, ohne jedoch hierfür auch unterschiedliche Innenteile 5 verwenden zu müssen.

Die Außenteile 4 der unterschiedlichen Typen von Kolben 1 haben Halteöffnungen 13 mit identischen Innendurchmessern für die Innenteile 5.

Die Erfindung befasst sich mit Verbesserungen auf dem technischen Gebiet der Scheibenbremsen. Hierfür wird unter anderem ein Kolben 1 für eine Scheibenbremse vorgeschlagen, der ein Außenteil 4 und ein in das Außenteil 4 eingesetztes Innenteil 5 umfasst, wobei zwischen dem Außenteil 4 und dem Innenteil 5 ein Hohlraum 8 ausgebildet ist, der durch zumindest eine flüssigkeitsdichte Verbindung 9,10 zwischen dem Innenteil 5 und dem Außenteil 4 gegen Eintritt von Hydraulikflüssigkeit flüssigkeitsdicht verschlossen ist.

### Bezugszeichenliste

- 1: Kolben
- 2: Anlagefläche
- 3: Kolbenmantel
- 4: Außenteil
- 5: Innenteil
- 6: Öffnung
- 7: Aufnahme in 5
- 8: Hohlraum zwischen 4 und 5
- 9: erste flüssigkeitsdichte Verbindung
- 10: zweite flüssigkeitsdichte Verbindung
- 11: Längsachse von 1
- 12: Einsetzöffnung
- 13: Halteöffnung
- 14: Rand um 12
- 15: Stützabschnitt
- 16: Zustellrichtung
- 17: Boden von 4
- 18: konischer Abschnitt von 5
- 19: axiale Stirnfläche von 4
- 20: axiale Stirnfläche von 5
- 21: Führungsabschnitt von 5
- 22: Beaufschlagungsfläche von 5
- 23: Anschlagfläche von 5
- 24: Krempe an 5
- 25: Kragen an 4
- 26: Vertiefung in 17
- 27: Nut in 17
- 28: Stirnöffnung von 4
- 29: Rand von 28
- 30: Absatz an 5
- 31: Stirnseite von 1 - hydraulische Seite
- 32: Stirnseite von 1
- 33: Stufe an 25

## Patentansprüche

1. Kolben (1) für eine Scheibenbremse mit einer Anlagefläche (2) für einen Bremsbelag, mit einem einen Kolbenmantel (3) ausbildenden Außenteil (4) und einem in das Außenteil (4) eingesetzten Innenteil (5), wobei das Innenteil (5) an seiner der Anlagefläche (2) abgewandten Seite eine Öffnung (6) und in seinem Inneren eine Aufnahme (7) aufweist, über die der Kolben (1) mit einer Hydraulikflüssigkeit und/oder mit einem Stellmittel eines Feststellbremsenantriebs beaufschlagbar ist, **dadurch gekennzeichnet, dass** zwischen dem Außenteil (4) und dem Innenteil (5) ein Hohlraum (8) ausgebildet ist, der durch zumindest eine flüssigkeitsdichte Verbindung (9,10) zwischen dem Innenteil (5) und dem Außenteil (4) gegen Eintritt von Hydraulikflüssigkeit aus der Aufnahme (7) des Innenteils (5) in den Hohlraum (8) flüssigkeitsdicht verschlossen ist, wobei die flüssigkeitsdichte Verbindung (9,10) zwischen einem eine Einsetzöffnung (12) des Außenteils (4) begrenzenden Rand (14) des Außenteils (4) und dem Innenteil (5) ausgebildet ist.

2. Kolben (1) nach dem vorherigen Anspruch, wobei der Hohlraum (8) durch zwei in Bezug auf eine Längsachse (11) des Kolbens (1) axial voneinander beabstandete flüssigkeitsdichte Verbindungen (9,10) zwischen dem Innenteil (5) und dem Außenteil (4) gegen Eintritt von Hydraulikflüssigkeit aus der Aufnahme (7) des Innenteils (5) in den Hohlraum (8) flüssigkeitsdicht verschlossen ist.

3. Kolben (1) nach Anspruch 1 oder 2, **dadurch gekennzeichnet, dass** das Außenteil (4) in Bezug auf eine Längsachse (11) des Kolbens (1) axial beabstandet zu einer oder der Einsetzöffnung (12) für das Innenteil (5) eine Halteöffnung (13) für das Innenteil (5) aufweist, in der das Innenteil (5) zur Abstützung an dem Außenteil (4) angeordnet ist, insbesondere wobei die Halteöffnung (13) einen Boden (17) des Außenteils (4) durchsetzt.

4. Kolben (1) nach einem der vorherigen Ansprüche, wobei die zumindest eine flüssigkeitsdichte Verbindung (9,10) eine stoffschlüssige Verbindung ist, insbesondere eine Schweißverbindung, vorzugsweise eine Laserschweißverbindung, und/oder die Längsachse (11) des Kolbens (1) ringförmig, insbesondere kreisringförmig, geschlossen umgibt.

5. Kolben (1) nach einem der vorherigen Ansprüche, wobei die Einsetzöffnung (12) des Außenteils (4) für das Innenteil (5) durch eine, insbesondere erste, flüssigkeitsdichte Verbindung (9,10) zwischen dem Außenteil (4) und dem Innenteil (5) flüssigkeitsdicht verschlossen ist.

6. Kolben (1) nach einem der Ansprüche 3 bis 5, wobei das Außenteil (4) einen Stützabschnitt (15) aufweist, an dem die Halteöffnung (13) für das Innenteil (5) ausgebildet ist und über den das Innenteil (5) in Zustellrichtung (16) des Kolbens (1) an dem Außenteil (4) abgestützt ist.

7. Kolben (1) nach dem vorherigen Anspruch, wobei der Stützabschnitt (15) ausgehend von der Anlagefläche (2) des Kolbens (1) einen spitzen Winkel, insbesondere einen Winkel zwischen 30° und 60°, vorzugsweise einen Winkel von 45°, mit der Längsachse (11) und/oder der Anlagefläche (2) des Kolbens (1) aufspannt.

8. Kolben (1) nach einem der vorherigen Ansprüche, wobei eine, insbesondere zweite, flüssigkeitsdichte Verbindung (9,10) die Halteöffnung (13) flüssigkeitsdicht verschließt und/oder zwischen dem Stützabschnitt (15) des Außenteils (4) und dem Innenteil (5) ausgebildet ist.

9. Kolben (1) nach einem der Ansprüche 3 bis 8, wobei die Halteöffnung (13) des Außenteils (4) in Bezug auf eine Längsachse (11) des Kolbens (1) axial zwischen der Anlagefläche (2) des Kolbens (1) und der Einsetzöffnung (12) des Außenteils (4), insbesondere in einem Boden (17) des Außenteils (4), ausgebildet ist, und/oder wobei die Einsetzöffnung (12) des Außenteils (4) einen größeren Durchmesser als die Halteöffnung (13) für das Innenteil (5) hat.

10. Kolben (1) nach einem der Ansprüche 3 bis 9, wobei das Innenteil (5) einen sich in Richtung der Anlagefläche (2) konisch verjüngenden Abschnitt (18) aufweist, mit dem das Innenteil (5) an dem Außenteil (4) abgestützt ist, insbesondere wobei das Innenteil (5) mit seinem konischen Abschnitt (18) in der Halteöffnung (13) des Außenteils (4) angeordnet ist.

11. Kolben (1) nach einem der vorherigen Ansprüche, wobei die Anlagefläche (2) des Kolbens (1) zumindest zum Teil an dem Außenteil (4) und/oder zumindest zum Teil an dem Innenteil (5) ausgebildet ist, insbesondere wobei eine axiale Stirnfläche (19) des Außenteils (4) und eine axiale Stirnfläche (20) des Innenteils (5) in einer gemeinsamen Ebene liegen und/oder gemeinsam die Anlagefläche (2) des Kolbens (1) bilden.

12. Kolben (1) nach einem der vorherigen Ansprüche, wobei das Innenteil (5) in seiner Aufnahme (7) einen Führungsabschnitt (21), insbesondere mit einem unrunden Innenquerschnitt zur Verdrehsicherung, für ein Stellmittel eines Feststellbremsenantriebs aufweist, und/oder wobei das Innenteil (5) in seiner Aufnahme (7) eine hydraulisch wirksame Beaufschlagungsfläche (22) und/oder eine Anschlagfläche (23) für ein Stellmittel eines Feststellbremsenantriebs aufweist.

13. Kolben (1) nach einem der vorherigen Ansprüche, wobei zumindest eine flüssigkeitsdichte Verbindung (9,10) zwischen dem Innenteil (5) und dem Außenteil (4) eine an einer Stirnseite (31,32) des Kolbens (1) ausgebildete flüssigkeitsdichte Verbindung (9,10) ist, vorzugsweise wobei der Kolben (1) an zwei einander abgewandten Stirnseiten (31,32) jeweils eine flüssigkeitsdichte Verbindung (9,10) zwischen Außenteil (4) und Innenteil (5) aufweist.

14. Kolben (1) nach einem der vorherigen Ansprüche, wobei das Außenteil (4) einen geschlossen um eine Längsachse (11) des Kolbens (1) umlaufenden Kragen (25) aufweist, der die Einsetzöffnung (12) für das Innenteil (5) begrenzt, insbesondere wobei eine flüssigkeitsdichte Verbindung (9,10) zwischen dem Innenteil (5) und dem Außenteil (4) zwischen dem Kragen (25) und dem Innenteil (5) angeordnet ist.

15. Kolben (1) nach einem der vorherigen Ansprüche, wobei das Außenteil (4) einen, vorzugsweise geschlossenen, Boden (17) aufweist, an oder auf dem das Innenteil (5) angeordnet ist, insbesondere wobei im Boden (17) eine Vertiefung (26), beispielsweise eine Nut (27), ausgebildet ist, in der das Innenteil (5) angeordnet ist.

16. Kolben (1) nach einem der vorherigen Ansprüche, wobei eine flüssigkeitsdichte Verbindung (9,10) zwischen Außenteil (4) und Innenteil (5) eine durch einen, insbesondere geschlossenen, Boden (17) des Außenteils (4) erzeugte Schweißverbindung, vorzugsweise eine Laserschweißverbindung, ist.

17. Kolben (1) nach einem der vorherigen Ansprüche, wobei das Außenteil (4) an seiner der Einsetzöffnung (12) abgewandten Stirnseite (32) eine Stirnöffnung (28) aufweist, deren Rand (29) einen Abstand zu dem Innenteil (5) aufweist.

18. Kolben (1) nach einem der vorherigen Ansprüche, wobei das Innenteil (5) an seiner Außenseite einen Absatz (30) aufweist, insbesondere mit dem das Innenteil (5) das Außenteil (4) kontaktiert.

19. Scheibenbremse mit zumindest einem Kolben (1) nach einem der vorherigen Ansprüche.

20. Baureihe umfassend zumindest zwei Typen von Kolben (1) nach einem der Ansprüche 1-18, wobei die zumindest zwei Typen von Kolben (1) identische Innenteile (5), insbesondere zumindest hinsichtlich des Volumens ihrer Aufnahmen (7) identische Innenteile (5), und Außenteile (4) mit unterschiedlichen Außendurchmessern aufweisen.

21. Baureihe nach dem vorherigen Anspruch, wobei die Außenteile (4) der unterschiedlichen Typen von Kolben (1) Halteöffnungen (13) mit identischen Innendurchmessern für Innenteile (5) und/oder identische Innenteile (5) aufweisen.

## Claims

1. Piston (1) for a disc brake having a contact surface (2) for a brake lining, having an outer part (4) forming a piston jacket (3) and an inner part (5) inserted into the outer part (4), wherein the inner part (5) has an opening (6) on its side facing away from the contact surface (2) and a receptacle (7) in its interior, via which the piston (1) can be acted upon by a hydraulic fluid and/or by an actuating means of a parking brake drive, **characterized in that** a cavity (8) is formed between the outer part (4) and the inner part (5), which cavity is sealed in a liquid-tight manner against the entry of hydraulic fluid from the receptacle (7) of the inner part (5) into the cavity (8) by at least one liquid-tight connection (9, 10) between the inner part (5) and the outer part (4), wherein the liquid-tight connection (9, 10) is formed between an edge (14) of the outer part (4) delimiting an insertion opening (12) of the outer part (4) and the inner part (5).

2. Piston (1) according to the preceding claim, wherein the cavity (8) is closed in a liquid-tight manner against the entry of hydraulic fluid from the receptacle (7) of the inner part (5) into the cavity (8) by two liquid-tight connections (9, 10) between the inner part (5) and the outer part (4), which connections are axially spaced apart from one another with respect to a longitudinal axis (11) of the piston (1).

3. Piston (1) according to claim 1 or 2, **characterized in that** the outer part (4) has a retaining opening (13) for the inner part (5) at an axial distance from one or the insertion opening (12) for the inner part (5) with respect to a longitudinal axis (11) of the piston (1), in which retaining opening the inner part (5) is arranged for support on the outer part (4), in particular the retaining opening (13) passing through a base (17) of the outer part (4).

4. Piston (1) according to one of the preceding claims, wherein the at least one liquid-tight connection (9, 10) is a materially bonded connection, in particular a welded connection, preferably a laser-welded connection, and/or surrounds the longitudinal axis (11) of the piston (1) in an annular, in particular circular, closed manner.

5. Piston (1) according to one of the preceding claims, wherein the insertion opening (12) of the outer part (4) for the inner part (5) is closed in a liquid-tight manner by a, in particular first, liquid-tight connection (9, 10) between the outer part (4) and the inner part (5).

6. Piston (1) according to one of claims 3 to 5, wherein the outer part (4) has a support section (15) on which the retaining opening (13) for the inner part (5) is formed and via which the inner part (5) is supported on the outer part (4) in the feed direction (16) of the piston (1).

7. Piston (1) according to the preceding claim, wherein the support section (15), starting from the contact surface (2) of the piston (1), forms an acute angle, in particular an angle of between 30° and 60°, preferably an angle of 45°, with the longitudinal axis (11) and/or the contact surface (2) of the piston (1).

8. Piston (1) according to one of the preceding claims, wherein a, in particular second, liquid-tight connection (9, 10) closes the retaining opening (13) in a liquid-tight manner and/or is formed between the support section (15) of the outer part (4) and the inner part (5).

9. Piston (1) according to one of claims 3 to 8, wherein the retaining opening (13) of the outer part (4) is formed axially with respect to a longitudinal axis (11) of the piston (1) between the contact surface (2) of the piston (1) and the insertion opening (12) of the outer part (4), in particular in a base (17) of the outer part (4), and/or wherein the insertion opening (12) of the outer part (4) has a larger diameter than the retaining opening (13) for the inner part (5).

10. Piston (1) according to one of claims 3 to 9, wherein the inner part (5) has a section (18) tapering conically in the direction of the contact surface (2), with which the inner part (5) is supported on the outer part (4), in particular wherein the inner part (5) is arranged with its conical section (18) in the retaining opening (13) of the outer part (4).

11. Piston (1) according to one of the preceding claims, wherein the contact surface (2) of the piston (1) is formed at least in part on the outer part (4) and/or at least in part on the inner part (5), in particular wherein an axial end face (19) of the outer part (4) and an axial end face (20) of the inner part (5) lie in a common plane and/or together form the contact surface (2) of the piston (1).

12. Piston (1) according to one of the preceding claims, wherein the inner part (5) has in its receptacle (7) a guide section (21), in particular with a non-circular inner cross-section for preventing rotation, for an actuating means of a parking brake drive, and/or wherein the inner part (5) has in its receptacle (7) a hydraulically effective impact surface (22) and/or a stop surface (23) for an actuating means of a parking brake drive.

13. Piston (1) according to one of the preceding claims, wherein at least one liquid-tight connection (9, 10) between the inner part (5) and the outer part (4) is a liquid-tight connection (9, 10) formed on an end face (31, 32) of the piston (1), preferably wherein the piston (1) has a respective liquid-tight connection (9, 10) between the outer part (4) and the inner part (5) on two end faces (31, 32) facing away from each other.

14. Piston (1) according to one of the preceding claims, wherein the outer part (4) has a collar (25) which extends in a closed manner around a longitudinal axis (11) of the piston (1) and which delimits the insertion opening (12) for the inner part (5), in particular wherein a liquid-tight connection (9, 10) between the inner part (5) and the outer part (4) is arranged between the collar (25) and the inner part (5).

15. Piston (1) according to one of the preceding claims, wherein the outer part (4) comprises a, preferably closed, base (17) at or on which the inner part (5) is arranged, in particular wherein a depression (26), for example a groove (27), is formed in the base (17), in which the inner part (5) is arranged.

16. Piston (1) according to one of the preceding claims, wherein a liquid-tight connection (9, 10) between outer part (4) and inner part (5) is a welded connection, preferably a laser welded connection, produced by a, in particular closed, base (17) of the outer part (4).

17. Piston (1) according to one of the preceding claims, wherein the outer part (4) has an end opening (28) on its end face (32) facing away from the insertion opening (12), the edge (29) of which has a distance from the inner part (5).

18. Piston (1) according to one of the preceding claims, wherein the inner part (5) has a shoulder (30) on its outer side, in particular with which the inner part (5) contacts the outer part (4).

19. Disc brake having at least one piston (1) according to one of the preceding claims.

20. Series comprising at least two types of pistons (1) according to one of claims 1-18, wherein the at least two types of pistons (1) have identical inner parts (5), in particular identical inner parts (5) at least with respect to the volume of their receptacles (7), and outer parts (4) with different outer diameters.

21. Series according to the preceding claim, wherein the outer parts (4) of the different types of pistons (1) have retaining openings (13) with identical inner diameters for inner parts (5) and/or identical inner parts (5).

## Revendications

1. Piston (1) pour un frein à disque avec une surface d'application (2) pour une plaquette de frein, avec une partie extérieure (4) formant une jupe de piston (3) et avec une partie intérieure (5) insérée dans la partie extérieure (4), laquelle partie intérieure (5) présente une ouverture (6) sur son côté opposé à la surface d'application (2) et un logement (7) dans son intérieur, via lequel le piston (1) peut être soumis à l'action d'un liquide hydraulique et/ou d'un moyen d'actionnement d'un entraînement de frein d'immobilisation, **caractérisé en ce qu'**est formée entre la partie extérieure (4) et la partie intérieure (5) une cavité (8) qui est fermée de façon étanche au liquide par au moins un raccord étanche au liquide (9, 10) entre la partie intérieure (5) et la partie extérieure (4) pour empêcher la pénétration de liquide hydraulique provenant du logement (7) de la partie intérieure (5) dans la cavité (8), le raccord étanche au liquide (9, 10) étant formé entre un bord (14) de la partie extérieure (4) délimitant une ouverture d'insertion (12) de la partie extérieure (4) et la partie intérieure (5).

2. Piston (1) selon la revendication précédente, dans lequel la cavité (8) est fermée de façon étanche au liquide par deux raccords étanches au liquide (9, 10) entre la partie intérieure (5) et la partie extérieure (4) écartés l'un de l'autre dans le sens axial par rapport à un axe longitudinal (11) du piston (1) pour empêcher la pénétration de liquide hydraulique provenant du logement (7) de la partie intérieure (5) dans la cavité (8).

3. Piston (1) selon la revendication 1 ou 2, **caractérisé en ce que** la partie extérieure (4) présente, à distance dans le sens axial, par rapport à un axe longitudinal (11) du piston (1), d'une ouverture ou de l'ouverture d'insertion (12) pour la partie intérieure (5), une ouverture de maintien pour la partie intérieure (5) dans laquelle la partie intérieure (5) est disposée pour s'appuyer sur la partie extérieure (4), l'ouverture de maintien (13) traversant en particulier un fond (17) de la partie extérieure (4).

4. Piston (1) selon l'une des revendications précédentes, dans lequel l'au moins un raccord étanche au liquide (9, 10) est un assemblage par solidarité de matière, en particulier un raccord soudé, de préférence un raccord soudé par laser, et/ou entoure l'axe longitudinal (11) du piston (1) en formant un anneau fermé, en particulier un anneau circulaire.

5. Piston (1) selon l'une des revendications précédentes, dans lequel l'ouverture d'insertion (12) de la partie extérieure (4) pour la partie intérieure (5) est fermée de façon étanche au liquide par un raccord étanche au liquide (9, 10), en particulier un premier raccord, entre la partie extérieure (4) et la partie intérieure (5).

6. Piston (1) selon l'une des revendications 3 à 5, dans lequel la partie extérieure (4) comporte une section d'appui (15) sur laquelle est formée l'ouverture de maintien (13) pour la partie intérieure (5) et par laquelle la partie intérieure (5) s'appuie sur la partie extérieure (4) dans la position d'avance (16) du piston (1).

7. Piston (1) selon la revendication précédente, dans lequel la section d'appui (15) forme à partir de la surface d'application (2) du piston (1) un angle aigu, en particulier un angle compris entre 30° et 60°, de préférence un angle de 45°, avec l'axe longitudinal (11) et/ou la surface d'application (2) du piston (1).

8. Piston (1) selon l'une des revendications précédentes, dans lequel un raccord étanche au liquide (9, 10), en particulier un deuxième raccord, ferme l'ouverture de maintien (13) de façon étanche au liquide et/ou est formé entre la section d'appui (15) de la partie extérieure (4) et la partie intérieure (5).

9. Piston (1) selon l'une des revendications 3 à 8, dans lequel l'ouverture de maintien (13) de la partie extérieure (4) est formée, dans le sens axial par rapport à un axe longitudinal (11) du piston (1), entre la surface d'application (2) du piston (1) et l'ouverture d'insertion (12) de la partie extérieure (4), en particulier dans un fond (17) de la partie extérieure (4), et/ou dans lequel l'ouverture d'insertion (12) de la partie extérieure (4) a un plus grand diamètre que l'ouverture de maintien (13) pour la partie intérieure (5).

10. Piston (1) selon l'une des revendications 3 à 9, dans lequel la partie intérieure (5) comporte une section (18) qui se resserre en cône en direction de la surface d'application (2), avec laquelle la partie intérieure (5) s'appuie sur la partie extérieure (4), en particulier dans lequel la partie intérieure (5) est disposée avec sa section conique (18) dans l'ouverture de maintien (13) de la partie extérieure (4).

11. Piston (1) selon l'une des revendications précédentes, dans lequel la surface d'application (2) du piston (1) est au moins en partie formée sur la partie extérieure (4) et/ou au moins en partie sur la partie intérieure (5), en particulier dans lequel une face d'extrémité axiale (19) de la partie extérieure (4) et une face d'extrémité axiale (20) de la partie intérieure (5) se trouvent dans un plan commun et/ou forment ensemble la surface d'application (2) du piston (1).

12. Piston (1) selon l'une des revendications précédentes, dans lequel la partie intérieure (5) comporte dans son logement (7) une section de guidage (21), en particulier avec une section intérieure non ronde servant de sécurité contre la rotation, pour un moyen d'actionnement d'un entraînement de frein d'immobilisation, et/ou dans lequel la partie intérieure (5) comporte dans son logement (7) une surface d'exposition (22) ayant un effet hydraulique et/ou une surface de butée (23) pour un moyen d'actionnement d'un frein d'immobilisation.

13. Piston (1) selon l'une des revendications précédentes, dans lequel au moins un raccord étanche au liquide (9, 10) est un raccord étanche au liquide (9, 10) formé entre la partie intérieure (5) et la partie extérieure (4) sur une face d'extrémité (31, 32) du piston (1), de préférence dans lequel le piston (1) présente sur deux faces d'extrémité (31, 32) opposées l'une à l'autre un raccord étanche au liquide (9, 10) entre la partie extérieure (4) et la partie intérieure (5).

14. Piston (1) selon l'une des revendications précédentes, dans lequel la partie extérieure (4) comporte un collet (25) fermé entourant un axe longitudinal (11) du piston (1), qui délimite l'ouverture d'insertion (12) pour la partie intérieure (5), en particulier dans lequel un raccord étanche au liquide (9, 10) est disposé entre la partie intérieure (5) et la partie extérieure (4) entre le collet (25) et la partie intérieure (5).

15. Piston (1) selon l'une des revendications précédentes, dans lequel la partie extérieure (4) comporte un fond (17), de préférence fermé, sur lequel la partie intérieure (5) est disposée, en particulier dans lequel un creux (26), par exemple une rainure (27), dans lequel la partie intérieure (5) est disposée, est disposé dans le fond (17).

16. Piston (1) selon l'une des revendications précédentes, dans lequel un raccord étanche au liquide (9, 10) entre la partie extérieure (4) et la partie intérieure (5) est un assemblage soudé, de préférence un assemblage soudé par laser, formé à travers un fond (17), en particulier fermé, de la partie extérieure (4).

17. Piston (1) selon l'une des revendications précédentes, dans lequel la partie extérieure (4) comporte, sur sa face d'extrémité (32) opposée à l'ouverture d'insertion (12), une ouverture d'extrémité (28) dont le bord (29) se trouve à distance de la partie intérieure (5).

18. Piston (1) selon l'une des revendications précédentes, dans lequel la partie intérieure (5) comporte sur sa face extérieure un épaulement (30), en particulier sur lequel la partie intérieure (5) vient en contact avec la partie extérieure (4).

19. Frein à disque muni d'au moins un piston (1) selon l'une des revendications précédentes.

20. Série comprenant deux types de piston (1) selon l'une des revendications 1 à 18, dans laquelle les au moins deux types de piston (1) comportent des parties intérieures (5) identiques, en particulier des parties intérieures (5) identiques en ce qui concerne le volume de leurs logements (7), et des parties extérieures (4) de diamètre extérieur différent.

21. Série selon la revendication précédente, dans laquelle les parties extérieures (4) des différents types de piston (1) comportent des ouvertures de maintien (13) de diamètre intérieur identique pour des parties intérieures (5) et/ou des parties intérieures (5) identiques.
